# EUROPEAN PATENT APPLICATION

(11) **EP 1 531 329 A1**
(43) Date of publication of application: **18.05.2005**
(21) Application number: 04256849.3
(22) Date of filing: 05.11.2004
(51) Int. Cl.: G01N 21/88, G01N 21/89

(54) **Method for retrospective rejection of defective objects**

(30) Priority: 15.11.2003 GB 0326696
(71) Applicant: Sencon Europe Limited, Worcester WR3 8SG (GB)
(72) Inventor: Nelen, Lucien Johannes, Worcester WR1 1SD (GB)
(74) Representative: Jackson, Derek Charles

(57) **Abstract**

Defective objects can be retrospectively rejected by passing objects (9, 10) sequentially past at least one sensor (20) which generates a signal representative of a property of each object. The sensor is first calibrated and a set point is established in dependence upon the signal generated by the sensor in respect of at least the first such object to pass the sensor. The at least first object is presumed not to be defective. A sensor signal is generated in respect of a subsequent object and, in the event of a signal which varies from the set point by at least a predetermined threshold in a predetermined direction, a number of actions are taken. The set point is re-established in dependence upon the signal generated in respect of the subsequent object. In addition an indication (23) is provided that at least the preceding object was defective and is to be rejected.

## Description

This invention relates to a method for the retrospective rejection of defective objects.

It is common in many industries to employ sensors which check one or more properties of an object and are able to accept or reject that object on the basis of the measured property. Where the sensor is mounted on a production line along which a stream of the objects passes, it is known to employ self-calibrating (or intelligent) sensors which are able to learn and to adjust their response to the measured property in order more accurately to decide whether or not an object should be rejected. Self-calibration is generally effected by measuring a number of samples and assuming the majority is correct.

For example, in the manufacture of food and drink cans sensors are used to determine whether a single sheet is being fed through the manufacturing process or whether two sheets have been fed simultaneously and should therefore be rejected. Also in the manufacture of food and drink cans sensors are used to determine whether a sheet has been coated with lacquer in order to isolate the material of the can from its contents. If the sheet has not been coated, or if the coating is defective, the sheet should be rejected.

Self-calibrating sensors can be used to measure suitable parameters, such as the thickness of the sheet or the reflective properties of the sheet, and have the advantage that they can adjust to minor variations in the measured parameter, such as in material thickness or in the reflective properties.

However, a problem arises when the first object or objects on the production line is or are defective and should be rejected. At this stage the self-calibrating sensor has not had the opportunity to adjust to the parameter(s) of the object being measured. In such a case the sensor is likely to allow the first, defective, object or objects to pass and may additionally also pass subsequent, defective, objects incorrectly until the measured parameter(s) have re-adjusted.

It is therefore an object of the present invention to provide a method for retrospective rejection of defective objects which overcomes or at least ameliorates the above disadvantage.

According to the present invention there is provided a method for retrospective rejection of defective objects comprising the steps of:
passing a plurality of objects sequentially past at least one sensor, the sensor being adapted to generate a signal representative of a property of each object;
calibrating the sensor and establishing a set point in dependence upon the signal generated by the sensor in respect of at least the first such object to pass the sensor, the at least first object being presumed not to be defective; and
generating a sensor signal in respect of a subsequent object and, in the event of a signal which varies from the set point by at least a predetermined threshold in a predetermined direction: re-establishing the set point in dependence upon the signal generated in respect of the subsequent object; and providing an indication that at least the preceding object was defective and is to be rejected.

The sensor may be adapted to detect electromagnetic radiation. The sensor may be adapted to detect thickness or reflectivity of the object.

The sensor may be adapted to generate a first signal in the event of an object being defective and a second signal in the event of an object not being defective. The sensor may be adapted to generate both the first and second signals in the event the preceding object is retrospectively determined to be defective. Alternatively, the sensor may be adapted to generate a third signal in the event the preceding object is retrospectively determined to be defective.

For a better understanding of the present invention and to show more clearly how it may be carried into effect reference will now be made, by way of example, to the accompanying drawings in which:
Figure 1 is a diagrammatic representation of part of a production line for manufacturing food or drink cans; and
Figure 2 is a diagrammatic illustration of a sensor arrangement for measuring the thickness of an object in the form of a sheet.

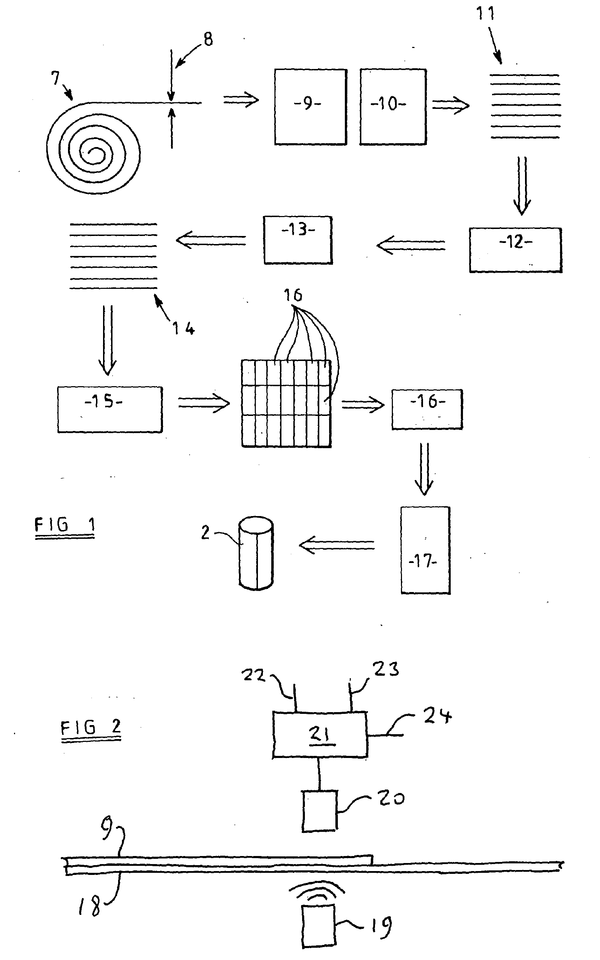

As shown in Figure 1, a large roll 7 of metal sheet, such as steel, is fed through a cutting station 8 (which typically comprises reciprocating shears) to cut the strip of metal into separate sheets (two of which are referenced 9 and 10). The sheets are typically approximately square, are then stacked (shown at 11) and fed in turn to a lacquering station 12 where lacquer is applied to the sheet metal. The sheets 9, 10 are then dried in an oven for about 20 to 30 minutes, and are then stored again in stacks (referenced 14). Some time after any particular sheet 9 enters the store of dried lacquered sheets, typically a day or two later, it is taken and passed to a slitter 15 (can producing plants typically maintain a large store of ready lacquered sheets) which cuts the sheet 9 into separate blanks 16. The blanks 16 enter a welding station where they are rolled and welded to form a tubular can body 2.

In the case of the production line illustrated in Figure 1, it may be desirable to detect whether two sheets 9 have been picked up simultaneously either from stack 11 and/or from stack 14. In each case this is conventionally effected with a sensor which measures the absorption of electromagnetic radiation.

Figure 2 shows a sheet 9 passing along a production line 18 with a source 19 of electromagnetic radiation positioned to one side (the lower side as shown in Figure 2) of the sheet 9 and a sensor 20 positioned on the other side (the upper side as shown in Figure 2) of the sheet 9 to generate a signal representative of the thickness of the sheet 9.

If the sheet is double, more of the signal will be absorbed and the measured signal strength will be about half that compared with a single sheet, indicating a relatively thick sheet.

The sensor 20 is connected to a controller 21 which has at least two outputs. If the sheet 9 is not defective in that the signal generated by the sensor does not exceed a set point in a predetermined direction (i.e., either greater or smaller) indicating an acceptable sheet thickness, output 22 is high, while output 23 is low. If the sheet 9 is defective and does not meet the thickness requirement the signal generated by the sensor 20 will exceed the set point in a predetermined direction and consequently output 22 is set low, while output 23 is set high. Output 23 can therefore be used to reject a defective sheet 9.

If the sensor 20 should inadvertently be calibrated on a double sheet, a set point will be determined denoting a non-defective object and output 22 will be set high and output 23 will be set low, acknowledging the sheet not to be defective, even though this is incorrect. However, should the sensor 20 subsequently pass a single sheet, the measured signal strength will suddenly be twice as strong and will vary from the calibrated set point by at least a predetermined threshold in a predetermined direction which indicates to the sensor that the existing set point is incorrect. Thus, from the increased signal strength, the sensor 20 now knows that the initial calibration was incorrect and accepts the new calibration and determines, or re-establishes, a new set point in dependence upon the signal generated by the sensor in respect of the subsequent sheet, conventionally setting output 22 high and output 23 low. The predetermined threshold may either be a fixed value or may, for example, be a predetermined percentage of the set point value.

However, this leaves the problem that the first sheet was in fact defective, but this was not recognised at the time. According to one embodiment of the present invention, this situation is rectified retrospectively by, instead of setting output 22 high and output 23 low, setting both outputs 22 and 23 high. This combined signal is recognised by a further controller (not shown) to indicate that the preceding sheet is defective. The controller then either stops the production line 18 temporarily to allow the defective sheet to be removed manually or activates a sheet removal station (not shown) to remove the defective sheet automatically.

Instead of both outputs 22 and 23 being set high, a third output 24 may be provided such that, in the event of a sheet being retrospectively determined to be defective, output 22 is high to indicate the subsequent sheet is not defective and output 24 is high to indicate the preceding sheet is defective and should be removed from the production line 18.

Clearly it is not essential that the sensor 20 should determine thickness. Another requirement in a can manufacturing process is to check that the lacquer is present and, if present, is correctly applied and this is assessed by employing a sensor to measure reflectivity. Thus a sheet 9 can be determined not to be defective based on its reflective properties, but when a subsequent sheet is assessed the preceding sheet can retrospectively be determined to be defective and removed from the production line using the same procedure as that explained above.

The method according to the present invention can be employed with any sensor that is required to self-calibrate on an unknown sample where there is sufficient knowledge of the resulting signal that, when a subsequent sample is assessed, enables the first sample retrospectively to be determined to be defective.

## Claims

1. A method for retrospective rejection of defective objects **characterised by** the steps of:
passing a plurality of objects (9, 10) sequentially past at least one sensor (20), the sensor being adapted to generate a signal representative of a property of each object;
calibrating the sensor and establishing a set point in dependence upon the signal generated by the sensor in respect of at least the first such object to pass the sensor, the at least first object being presumed not to be defective; and
generating a sensor signal in respect of a subsequent object and, in the event of a signal which varies from the set point by at least a predetermined threshold in a predetermined direction: re-establishing the set point in dependence upon the signal generated in respect of the subsequent object; and providing an indication (23) that at least the preceding object was defective and is to be rejected.

2. A method according to claim 1, **characterised in that** the sensor (20) is adapted to detect electromagnetic radiation.

3. A method according to claim 1 or 2, **characterised in that** the sensor (20) is adapted to detect thickness of the object (9, 10).

4. A method according to any preceding, **characterised in that** the sensor (20) is adapted to detect reflectivity of the object (9, 10).

5. A method according to any preceding claim, **characterised in that** the sensor (20) is adapted to generate a first signal (23) in the event of an object being defective and a second signal (22) in the event of an object (9, 10) not being defective.

6. A method according to any preceding claim, **characterised in that** the sensor (20) is adapted to generate both the first and second signals (22, 23) in the event the preceding object (9, 10) is retrospectively determined to be defective.

7. A method according to any one of claims 1 to 5, **characterised in that** the sensor (20) is adapted to generate a third signal (24) in the event the preceding object (9, 10) is retrospectively determined to be defective.
